Europäisches Patentamt

European Patent Office

Office européen des brevets

(11) Publication number: **0 463 186 A1**

# EUROPEAN PATENT APPLICATION

(21) Application number: **90111544.4**

(22) Date of filing: **19.06.90**

(51) Int. Cl.⁵: **B60R 22/44**

(43) Date of publication of application:
**02.01.92 Bulletin 92/01**

(84) Designated Contracting States:
**DE FR GB IT SE**

(71) Applicant: **Park, Sa Ryong**
**Kaepo Chugong Apt. 706-105, Kaepo-dong,**
**Kangnam-ku**
**Seoul(KR)**

(72) Inventor: **Park, Sa Ryong**
**Kaepo Chugong Apt. 706-105, Kaepo-dong,**
**Kangnam-ku**
**Seoul(KR)**

(74) Representative: **Kraus, Walter, Dr. et al**
**Patentanwälte Kraus, Weisert & Partner**
**Thomas-Wimmer-Ring 15**
**W-8000 München 22(DE)**

(54) **A seat belt winding force control device.**

(57) In a seat belt for use in a vehicle with a braking lever (21) engaging ratchet gears (32,32') for use as an emergency braking means, a seat belt winding force control device (1) is provided in which a braked means of ratchet gear (11) toothed contrary to said ratchet gears (32,32') is formed on the winding axis (5), and said braking means provided with a brake (12) which is elastically attached by a spring (13) is formed as the binding means of said braked means, and an intermittent snapping switch (18) or a solenoid is formed as the intermittent means of said braking means and said intermittent means (18) is operated by the belt snapping of the wearer.

The winding force can be easily locked and released by snatching within the range in which the wearer does not feel a sense of oppression. Even when the belt is drawn out by the movement of the wearer after winding force is set, it returns to its original position within the given limits and so it can be adapted for wearer's movement to some extent. Being formed of a relatively simple mechanism, the device operates without trouble and enjoys a nearly permanent life.

FIG. 1

## BACKGROUND OF THE INVENTION

### 1. Field of the Invention

The present invention relates to a seat belt installed in the seat of a vehicle. More particularly, the invention relates to an improvement in the retractor of seat belt provided with a means to brake the seat belt winding force.

### 2. Description of the Prior Art

The seat belt heretofore in use senses the increasing/decreasing speed of a vehicle through drawing acceleration of the belt or senses the acceleration of a vehicle by an electronic means and binds the wearer by operating an emergency brake. However, in the case of such a belt as described hereinabove, winding force generated by a windup spring continuously exists on the belt when it is used and presses the wearer. Thus, the belt wearers feel an uncomfortable sense.

To ease a sense of binding applied to the belt wearer and to provide a comfortable sense for the belt wearer, a device designed to draw out the belt from the retractor as much as needed and fix its winding force has been proposed. Generally, such a winding force locking means performs the following functions.

The belt wearer senses that the belt is worn and then puts the locking means in operating order. In many cases, this locking means operates before the wearer is finally seated, so that the intended effect is not produced.

In order to solve such a problem, "A seat belt retractor provided with a winding force locking means" described in the US Patent No. 4,261,531, by N S K Winnder Co., Ltd. has been proposed.

The aforesaid belt winding force locking means comprises a locking means in which it is interlocked with said a winding shaft means and a non-interlocked position in which it is not interlocked with said winding shaft means, said winding force locking means when placed in said interlocked position preventing the winding of a belt from its wearing position so far drawn out but permitting draw-out and winding of the belt in a predetermined range beyond its wearing position so far drawn out, a first sensing means for sensing the wearing of the belt by its wearer, and a second sensing means for sensing draw-out of the belt after the belt wearer assumes a normal seated position while wearing the belt.

However, in order to lock winding force when said means is used by the seat belt wearer, the first sensing means must be made to function by operating a buckle, which is a usual seat belt locking device, and winding force must be locked by drawing out the seat belt again. In order to release the locked winding force, the buckle must be operated again. Thus, it is troublesome to lock and release winding force every time the wearer is seated. Furthermore, said means is complicated mechanically and electronically by comprising a first sensing means in which a ball is internally installed, and a seperate second sensing means, so that the seat belt directly connected with the safety of a wearer is apt to cause trouble and its manufacturing cost is relatively high.

## SUMMARY OF THE INVENTION

The winding force control device of a seat belt must meet the following requirements.

Firstly, as seat belt is required to fulfil its function until a vehicle ceases to operate, its winding force control device must be free from trouble nearly permanently.

Secondly, winding force control device locking and releasing operation must be simple.

Thirdly, a winding force control device locking and releasing mechanism must be accurate.

Fourthly, the cost must not be increased by the addition of a winding force control means to the existing emergency braking means.

Up to the present, however, the seat belt winding force control device which meets those requirements has not yet been developed, and the fact that the seat belt has not been put to practical use in spite of absolute demand on the part of wearers indicates many problems it involves. Consequently, safety of riders has been seriously threatened even in an inconsiderable crash by wearing no seat belt.

The first object of the present invention is to provide a winding force control means is which the seat belt winding force is correctly locked and released by measly snatching the seat belt.

The second object of the present invention is to provide a returning means which enables the seat belt to the drawn out and wound up within the limits required for a little but moving of a wearer at his seat belt wearing position.

The third object of the present invention is to enable the seat belt wearer to control the seat belt winding force as required by him.

The fourth object of the present invention is to provide a seat belt winding control device which guarantees its correct operation and cheapens its manufacturing cost by simplifying structure and function.

## BRIEF DESCRIPTION OF THE DRAWINGS

The present invention will become more fully understood from the detailed description given hereinbelow and the accompanying drawings which are given by way of illustration only, and thus are not limitative of the present invention, and wherein :

Figure 1 is a perspective view showing that a retractor comprising the seat belt winding force control device according to the present invention is disassembled.

Figure 2 is a plane view showing that a retractor comprising the seat belt winding force control device according to the present invention is assembled.

Figure 3 is a sectional view taken along line A-A in Figure 2.

Figure 4 to 7 are views describing embodiments 1 to 4 of brake connection means in the present invention.

In those Figures,

(A) shows that the brake is not functioning.

(B) shows that the brake is in contact with a ratchet gear.

Figure 8 is a perspective view showing the disassembled brake in the present invention.

Figures 9 to 12 are sectional views of a brake in the present invention, which are diagrams showing embodiments 1 to 4 of a spring, one of the structural elements of a brake.

Figure 13 is an enlarged diagram of an overlapping spring illustrated in Figure 10.

Figure 14 is a diagram showing the formation and function of other embodiment of a brake in the present invention.

In this Figure,

(A) shows that the brake is in contact with the ratchet gears for the first time.

(B) shows that winding force of the belt is controlled by the brake.

Figure 15 is a diagram showing other embodiment of a commonly used brake reciprocating means in the present invention.

Figures 16 to 18 are embodiments 1 to 3 of a striking power absorbing means when the button pressing member of a braking lever in the present invention is operated.

In this Figure,

(A) shows that the brake is not functioning.

(B) shows that the brake is in contact with a ratchet.

Figure 19 is a diagram showing the operation of other embodiment of a winding force braking means in the present invention.

In this Figure,

(A) shows that the brake is not functioning.

(B) shows that the brake is in contact with the ratchet gears for the first time.

(C) shows that the seat belt winding force is controlled by the brake.

(D) shows condition of the brake when the belt is drawn out in a condition in which the seat belt winding force is controlled by the brake.

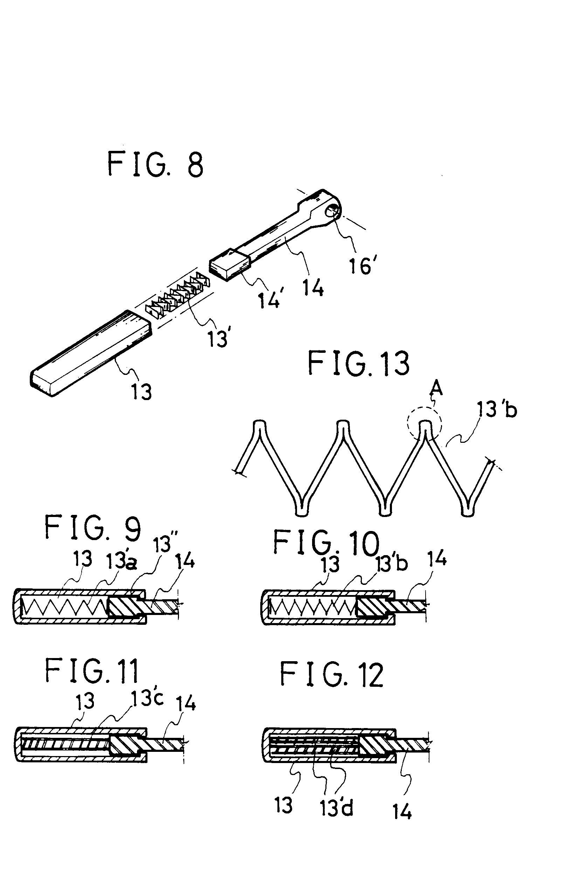

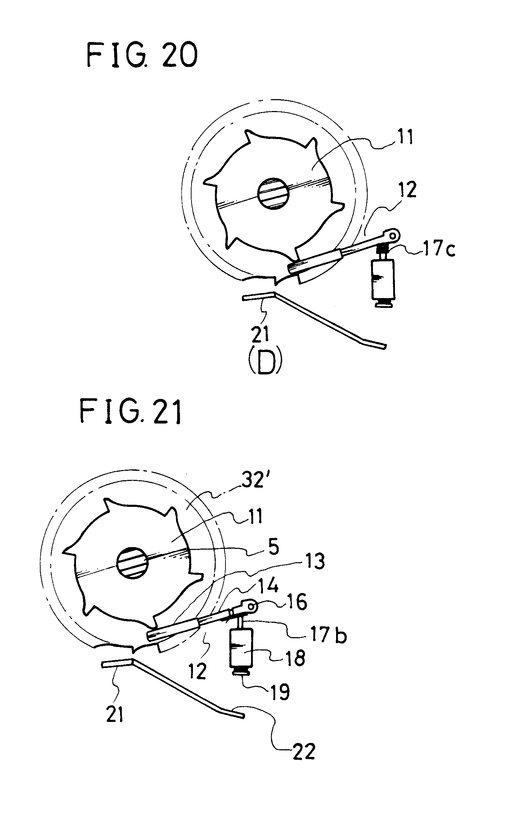

Figure 21 is a diagram showing the function of the second embodiment of a brake connection means illustrated in Figure 11.

DESCRIPTION OF THE PREFERRED EMBODIMENTS

The embodiments of the present invention will now be described in detail according to the drawings attached hereto. However, the quantity, quality, measurements and relative arrangement of constituent elements in the embodiments are not limited thereto.

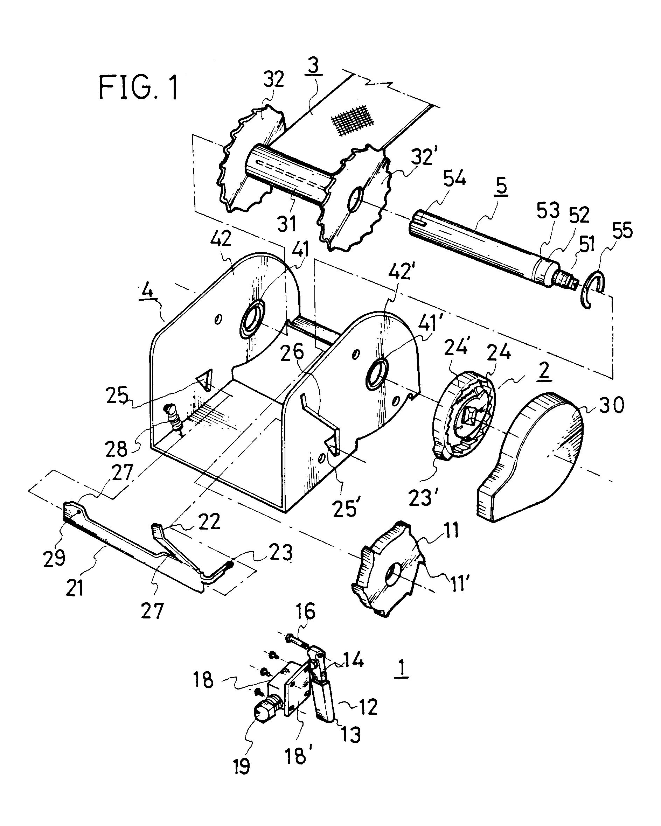

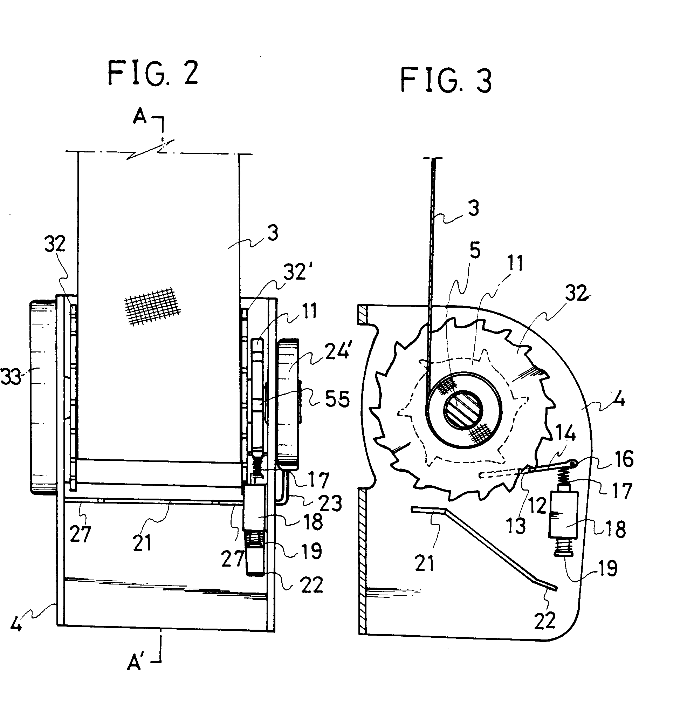

Figures 1 to 3 illustrate the embodiment of the present invention. Figure 1 is a disassembled perspective view. Figure 2 is an assembled plane view. Figure 3 is a sectional view taken along line A-A in Figure 2. It illustrates the combined condition of the embodiment.

The emergency braking means applied in the embodiment of the present invention is a device in which ratchet gears are engaged by the braking lever, a commonly used means. The emergency braking means will be described in the first place to help understand the present invention.

As is generally known, the emergency braking means, which is a device in which ratchet gears are engaged by the braking lever, assumes similar forms in various ways, and one of them is applied in the embodiment of the present invention and its rough formation will be described hereinafter.

As seen from Figures 1 to 3, a winding axis is installed by making holes(41)(41') in the frame on both sides of main body(4) and a belt reel(31) with a belt(3) wound thereon is externally attached to the center of said winding axis and ratchet gears-(32)(32') are respectively united with both sides of said belt reel(31).

On one side of said winding axis(5), a windup spring (33) is formed on the outer wall of frame(42) with its end inserted into the slit(54). On the other side of winding axis(5), an emergency braking means(20) is formed. To the winding axis(5) a braking latch(24) is fixedly attached. On the outer side thereof, an internally toothed ratchet gear(24') which comes into intermittent contact with said braking latch(24) is formed. A braking lever (21) is formed across the frames(42)(42') on both sides of main body with its end inserted into the braking lever sliding apertures(25)(25') bored in the frames-(42)(42') on both sides of main body(4). On one side of braking lever(21), a connecting member(3) is formed. When said connecting member(23) is inserted into the slot(23') formed on the outer side of internally toothed ratchet gear(24) of emergency braking means, the braking lever operates in the sliding apertures(25)(25') according to the up-and- down turn of internally toothed ratchet gear.

Thus, in the emergency braking means applied in this embodiment, the braking latch(24) engages with the internally toothed ratchet gear(24') not in motion and pulls it down thanks to the rapid belt drawing force in case of emergency and the internally toothed ratchet gear(24') turns downward rapidly. Accordingly, the connecting member(23) engaged therewith is pulled and the surface (27) of latch on both sides of braking lever(21) engages respectively with the ratchet gears(32)(32') on both sides thereof for emergency braking. When emergency braking is released, the belt(3) is wound and the braking lever(21) returns to its original position by being pulled to the back of the latch of ratchet gears(32)(32') The spring (28) connected with a hole(29) helps the braking lever(21) return to its original position.

The embodiment of the present invention forms a winding force control means(1) in relation to the emergency braking means described hereinabove. A ratchet gear (11) which functions as a braked gear is fixedly united with one side(52) of winding axis(5). The direction toward which the latch of said ratchet gear(11) is engaged is contrary to the direction toward which ratchet gears(32) (32') are engaged. The brake(12) comprises a braking means which comes into intermittent contact with said ratchet gear(11). The brake(12) is movably attached to the inner side of frame(42') on one side of main body(4). As illustrated in Figure 8, the brake(12) comprises a slide holder(13) which comes into intermittent contact with ratchet gear-(11), an accommodating member(14) which is inserted into the slide holder(13) and a pin hole(16') into which a pin(16) is inserted. A spring(13') is interposed in the slide holder(13) and an accommodating member (14) is resiliently formed in the slide holder(13). Symbol 13'' is a separation prevention jaw and 14' is a catching member.

The brake(12) is united with a connector(17) connected with the end of commonly used intermittent snapping switch (18). Accordingly, the brake-(12) is connected with the end of intermittent snapping switch(18) and turns the pin(16) to the axis by means of an intermittent snapping switch(18) which is operated by pushing a button(19). The intermittent snapping switch(18) is fixedly attached to the inner wall of frame(42') on one side. A button pushing member(22) is formed in one united body with the braking lever(21) by being drawn out to the rear upper end from one side of braking lever-(21). The button pushing member(22) is formed so as to push the button(19) when the braking lever operates. Unexplained symbol 51 is a braking lever fixing member. 53 is a halt ring insertion groove. 55 is a halt ring.

The working effect of such an embodiment as described hereinbefore will now be described.

When the belt wearer snatches the belt after slowly drawing it out from the belt reel(31) as much as needed or in the belt wearing condition, the braking latch(24) turns round quickly in a moment by engaging with the internally toothed ratchet gear(24'). Accordingly, the braking lever(21) suspends the drawing-out of the belt(3) by engaging with the ratchet gears(32)(32'). At the same time, the button pushing member(22) formed in the braking lever(21) pushes the button(19). Accordingly, the brake (12) connected with the end of intermittent snapping switch(18) is connected with the outer circumference (with the surface or other parts of latch) of ratchet gear(11). Then, the braking lever-(21) returns to its original position by the push of the latch of ratchet gears(32)(32') and, at the same time, the belt is wound and the ratchet gear(11) turns round counterclockwise. By this turning force, the slide holder(13) of brake(12) which is in contact with the ratchet gear(11) moves backward, and the slide holder(13) comes to a stop in a condition in which the spring(13') in the slide holder(13) is compressed. At that moment, the ratchet gear(11) is brought to a stop in a condition in which the ratchet gear(11) is in contact with the brake(12) for the first time and counterclockwise rotation is not disturbed. It is because the spring, a constituent part of the brake(12), is formed less elastically than the turning force of ratchet gear(11).

Such a backward moving means of brake(12) produces a difference in time between the first contact of ratchet gear(11) with the brake(12) and braking. This difference in time enables the braking lever(21) which engages with the ratchet gears(32)-(32') to return to its original position.

At the same time, the connector(17) continues to function, providing elastic force to the brake(12) which is in contact with the ratchet gear(11) and this function causes the brake(12) to operate smoothly without separating from the ratchet gear-(12).

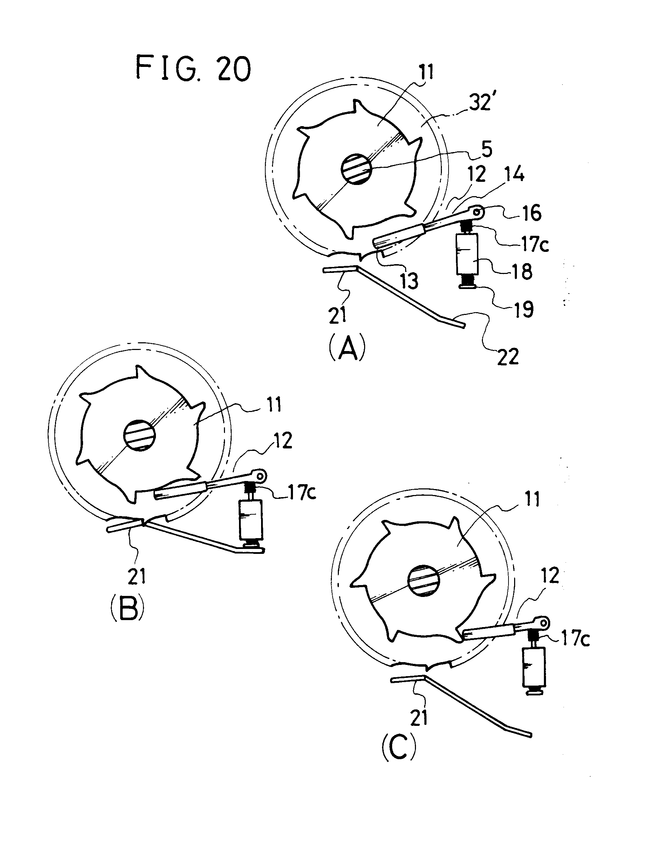

In the present invention, several embodiments of connector(17) which functions as stated above are provided. Those embodiments will be described hereinafter. Even when winding force is braked, namely, even when ratchet gear(11) can move round without regard to the control of brake-(12), if the belt is drawn out by being pulled with hand, and it can be adapted for drawing out and winding of the belt caused by the wearer's little movement when the belt is worn. It enables the belt even to be drawn out so much as the length of circular arc between the latch and latch of ratchet gear(11) and return to its original position. In other words, the ratchet gear(11) under control turns clockwise when the belt is slowly drawn out, as illustrated in Figure 20(C), and it becomes possible to draw out the belt with the brake(12) being pushed by the back of each latch. When the belt ceases to be drawn out, the ratchet gear(11) and the brake(12) return and winding force is kept in a braked condition. In order to release the braked condition of winding force, the brake(12) must be pulled quickly. When the belt moves quickly, the button pushing member(22) formed in the braking lever(21) pushes like when winding force is braked, and the brake(12) returns by separating from the ratchet gear(11).

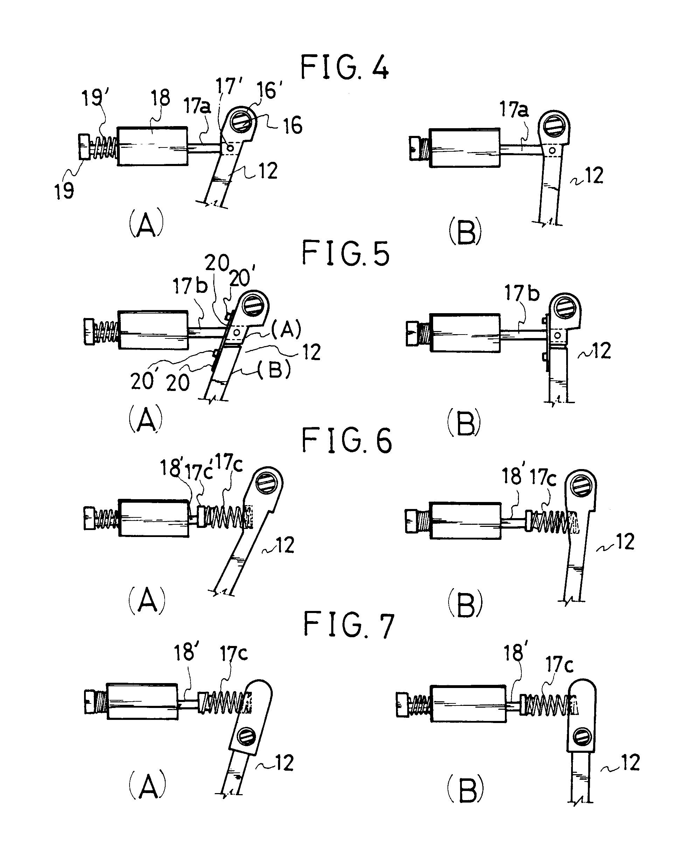

Figures 4 to 8 are the embodiments 1 to 4 of a means connecting the commonly used intermittent snapping switch and the brake(12). As referred to in the aforesaid embodiment, when the button pushing member(20) of braking lever (21) strikes the button(19) by the operation of braking lever(21), the brake(12) turns the pin(16) to the axis by the forward and backward movement of button(19). Although the amount of movement is very small, the lower end of brake(12) which is in contact with the ratchet gear (11) is far away from the center of axis as compared with the region connecting the connector(17) and the brake(12) and so the amount of movement achieved by the lower end of brake(12) which is in contact with the ratchet gear(11) is great.

The first embodiment is formed by using an extending member(17a) extending from the end of intermittent snapping switch(18) as a connector and by connecting said extending member(17a) directly with the surface on one side beneath the pin(16) of brake(12), as illustrated in Figure 4. Figure 4(A) shows that the intermittent snapping switch(18) is not intermittent and that the brake(12) is connected with the ratchet gear(11). (B) shows that the brake(12) is in contact with the ratchet geat(11). Unexplained symbol 16' is a lubricating mouth. 19' is a button returning spring

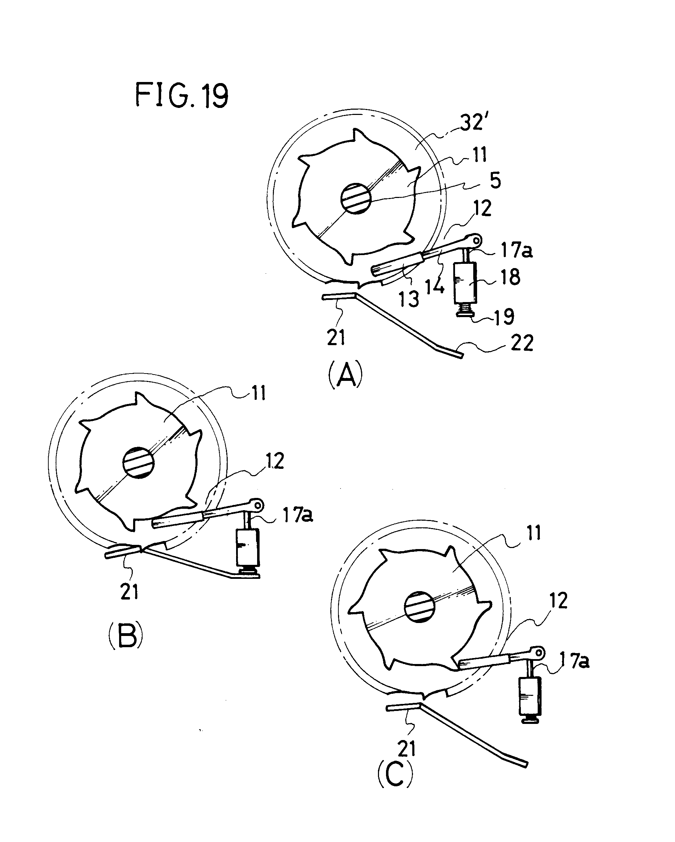

Figure 19 illustrates in detail that the ratchet gear (11) is in contact with the brake(12) according to the first embodiment. Figure 9(A) shows that the brake(12) is in contact with the ratchet gear(11). Figure 9(B) illustrates that the brake(12) is in contact with the ratchet gear(11) for the first time by the operation of braking lever(21). Figure 9(C) represents that the slide holder (13) of brake(12) finishes its backward movement and winding force is controlled by controlling the rotation of ratchet gear(11). Figure 5 shows the formation of a second embodiment. The second embodiment shows that an extending member(17b) extending from the end of intermittent snapping switch(18) is used as a connector and a plate spring(20) is united with said extending member(17b), as illustrated in Figure 5. The brake(12) is separated into the connecting region(A) of connector and brake function part(B). The connecting region(A) is united with the extending member(17b) with the plate spring (20) as an intermediate member and the brake function part(B) is united with the lower region of plate spring (20). Unexplained symbol 20' is a plate spring fastener.

The working effect according to such second embodiment formation is that the plate spring(20) united with the brake function part(B) functions if the back of the latch of ratchet gear(11) pushes the brake(12) when the belt is drawn out in a condition in which winding force is controlled, and the brake function part(B) bends backward, as illustrated in Figure 21. The formation of a third embodiment is that a spring inserting member(17c') is united with the end of intermittent terminal(18') of intermittent snapping switch(18) and one side of coil spring(17c) is inseparably inserted into the spring inserting member(17c') and the other side of said coil spring(17c) is used as a connector of intermittent snapping switch(18) and brake(12) by attaching or depositing it to the lower side of brake(12) pin(16) with a known means, as illustrated in Figure 6.

The working effect of such formation will be described according to Figure 20. As illustrated in Figure 20(A), the coil spring(17c) supports the brake (12) in a condition in which the braking lever(21) is operating. The coil spring(17c) holds its elastic force to the extent that it is not affected by its own weight when the brake(12) is pushed and pulled

Next, when the braking lever(16) operates and the button pushing member(22) pushes the button(19), the intermittent snapping switch(18) functions and advances the coil spring(17c) and then the brake(12) connected with the coil spring(17c) turns the pin (16) to the axis Accordingly, the end of brake(12) comes into contact with the ratchet gear(11), as illustrated in Figure 20(B). Figure 20(C) shows that it is in a condition in which winding force is controlled as stated hereinbefore. Figure 20(D) shows when the belt is drawn out in a condition in which braking is controlled. At this time, the belt can be drawn out because the coil spring(17c) is compressed and the brake(12) is thereby made to bend backward.

Figure 7 is the embodiment 4. Like embodiment 3, the coil spring(17c) is used as a connector of intermittent snapping switch(18) and brake(12), but the brake pin(16) fastening position is formed in the middle of brake(12) and the coil spring connecting position is formed in the upper part of brake(12). Figure 8 illustrates constructing form and constituent elements for one embodiment of brake(12). As described hereinbefore, the accommodating member(14) is inseparably inserted into the slide holder(12) and a spring(13') is placed therein.

Figures 9 to 12 illustrate the formation of brake (12) sectionally and also the embodiments 1 to 4 of spring(13'). The spring illustrated in Figures 9 and 10 is an overlapping spring. The overlapping spring expressed in Figure 10 minimizes its fatigue caused by repeated motion by compressing-(compression part A) its bending part as illustrated in Figure 13 and thereby lessens all apprehensions that the bending part may be destroyed.

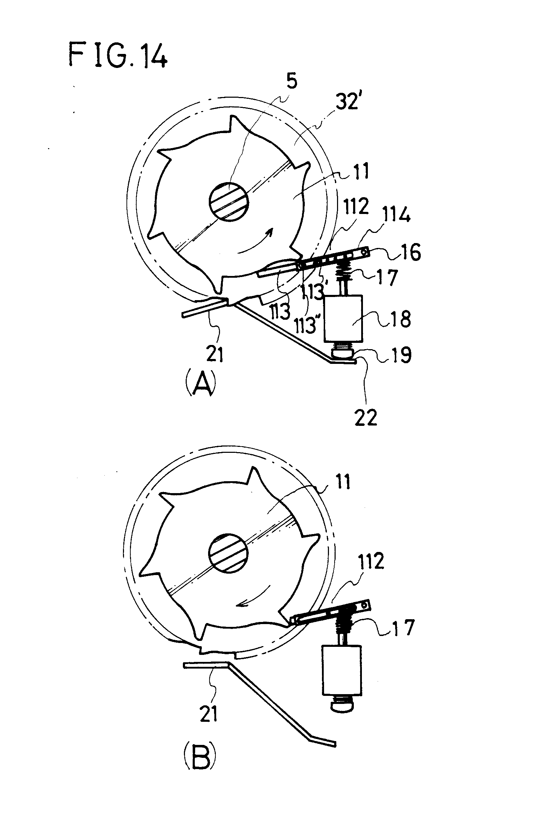

Figure 11 illustrates an instance where a coil spring is used. Figure 12 shows that two coil springs are used. Figure 14 illustrates the other embodiment of brake(12). The brake(12) illustrated in this embodiment is formed in a condition in which a braking member(113) is strengthened within the accommodating holder(114) by a spring-(113'), and the braking member (113) is prevented from separating from the accomodating holder(114) by a pin(113'').

As a working effect of such formation, Figure 14(A) shows that the ratchet gear(11) is in contact with the brake(12) for the first time by the operation of braking lever(21). When the ratchet gear(11) moves in the direction of arrow after it comes into contact with the brake(12), the braking member-(113) presses the spring (113) and goes into the accommodating holder(114) and the ratchet gear-(11) ceases to turn round in a condition where the spring(113') is compressed, as illustrated in Figure 14(B). Likewise, the braking lever(21) engaged with the ratchet gears(32)(32') while the braking member (113) goes into the accommodating holder(114) returns to its original position by being pushed to the back of the latch of ratchet gears(32)(32').

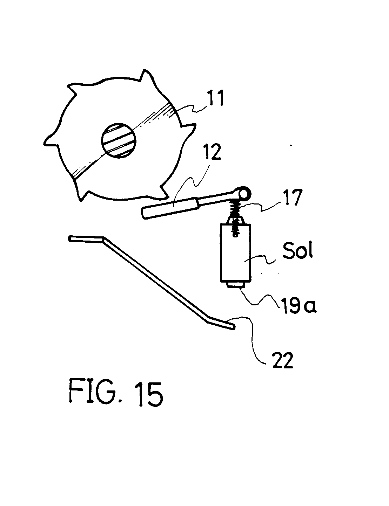

Figure 15 is the embodiment of the reciprocating means of brake acting for the aforesaid intermittent snapping switch. It uses the basic operation of solenoid to the best advantage. When the button pushing member(20) formed in the braking lever-(21) pushes a button(19a), power source is impressed on the solenoid (sol) and the brake(12) comes into contact with the ratchet gear(11) by the operation of solenoid(sol) in a condition where the brake is separated from the ratchet gear(11) and, in case winding force is released, power source is cut off if the belt is snapped again and the button is pushed by the button pushing member (20), and then the brake(12) returns to its original position.

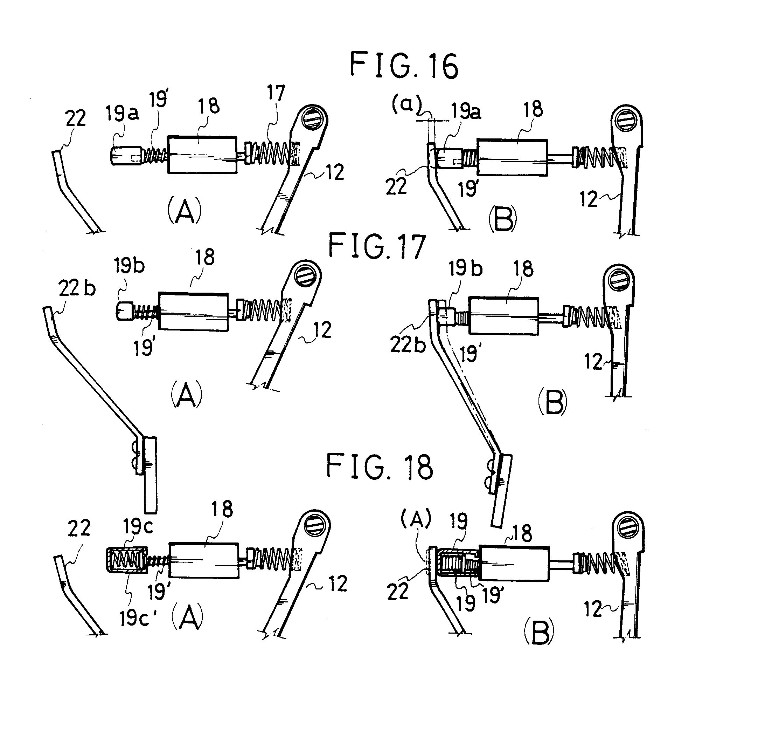

Figures 16 to 18 illustrate the embodiments 1 to 3 of a means for absorbing the striking power of button pushing member(22) remaining due to the operation of braking lever(21). Such a striking power absorbing means provides the two effects described hereinafter.

Firstly, the constituent elements of button(19) and intermittent snapping switch which may be damaged by the striking power of button pushing member(22) can be protected by absorbing some striking power of button pushing member(22).

Secondly, the button pushing member(22) operates simultaneously with the braking lever(21) and, the moment this braking lever finishes its engagement with the ratchet gears(32)(32'), the sphere of button pushing member(22) activity is restricted. In order to enable the intermittent snapping switch(18) to function, the amount of movement by the striking power of button pushing member(22) up to a predetermined line is required. It is essential for the operation of brake(12).

In view of such a respect, the braking lever(21) and the button pushing member(22) must be united so that a point of time the braking lever(21) finishes its engagement with ratchet gears(32)(32') may correspond with a point of time the button pushing member(22) completes its activity to the extent that it is required by the intermittent snapping switch-(18).

In order to meet such requirements, precision is required when the device is manufactured. Otherwise, it suffers from a problem by erroneous operation.

In this embodiment, therefore, erroneous operation caused by an error committed during manufacture is prevented by enabling the sphere of button pushing member(22) activity to exceed in some degree the amount of intermittent end movement required primarily by the intermittent snapping switch(18) and the exceeding striking power of button pushing member(22) is absorbed in the button(19) and or in the button pushing member-(22).

Figure 16 is the formation of a first embodiment. The power exceeding when a blow is given by the button pushing member is absorbed in the button(19a), as illustrated in Figure 16(B), by providing the button (19a) with striking power absorbable contractile quality. The button(19a) contracts to the extent of (a) in a condition where the intermittent snapping switch(18) finishes its functioning, as illustrated by a one point chain line.

Figure 17 is the formation of a second embodiment. The button pushing member(22b) is provided with resilient quality. As illustrated in Figure 17(B), the resilient button pushing member(22b) absorbs the remaining power exceeding when a blow is given by the button pushing member(22). The button pushing member(22b) completes the functioning of intermittent snapping switch(18) in a condition illustrated by a one point chain line and the resilient button pushing member(22b) bends backward and absorbs the remaining power as illustrated by a solid line.

Figure 18 is the formation of a third embodiment. A spring(19c') is formed in the button(19). By forming the elastic force of said spring greater than the force necessary to operate the intermittent snapping switch(18), the button(19c) moves forward in some degree and completes the functioning of intermittent snapping switch(18) and its exceeding force is absorbed by the button(19c). In other words, the intermittent snapping switch(18) completes its functioning at the location of button illustrated by a one point chain line in Figure 18(B) and its exceeding force is absorbed by the button(19c).

The merits of seat belt winding force control device according to the present invention having formation and its working effect as described hereinbefore are as follows :

Firstly, the device can easily adjust seat belt winding force within the range where the wearer does not feel a sense of oppression.

Secondly, the wearer can conveniently adjust winding force because the device can control it in any part of the belt.

Thirdly, when the belt winding force braking is released by the device, the belt performs the same role and function as the belt heretofore in use.

Fourthly, the device can control winding force or release it if the wearer holds the belt and draws it out and then snatches it in a condition where it is held by hand. Such control and release is possible in any part of the belt and the belt can be used conveniently.

Fifthly, even if the belt is released to some extent when the wearer moves after desired winding force control is set, it returns to its originally set position within the given limits.

Sixthly, when the wearer finds it necessary to extends the belt longer after winding force control is set, the belt is set again at its desired length, if only it is drawn out by weak force.

Seventhly, the device commits no error in operation, enjoys a nearly permanent life, operates without trouble and cheapens its manufacturing cost for the reason that it is provided with a simply functioning mechanism.

Eighthly, the wearer does not feel oppression and clothes are not crumpled if the wearer sets control when he finds it fit.

The present invention as described in those embodiments is considered enough for producing the intended effect.

**Claims**

1. In the seat belt for use in a vehicle provided with a device in which ratchet gears are engaged by the braking lever as an emergency braking means, a seat belt winding force control device, characterized in that when it is not necessary to control the seat belt winding force, the seat belt can be used in the same manner as the usual seat belt and, when it is necessary to control the seat belt winding force, belt snatching by the wearer is used as a seat belt winding force control means.

2. In a seat belt for use in a vehicle with a device in which ratchet gears are engaged by the braking lever as an emergency braking means, the seat belt winding force control device according to claim 1, characterized in that a braked means is united with a winding axis, and a braking means which can come into contact with said braked means is formed, and a reciprocating means is formed so as to enable said braking means to come into intermittent contact with the braked means, but the control of said reciprocating means is used as the vitality of braking lever of emergency braking means.

3. The seat belt winding force control device according to claim 2, characterized in that the braked means is formed by fixedly uniting with the winding axis (5) the ratchet gear(11) which forms a latch contrary to the direction toward which ratchet gears (32)(32') constituting an emergency braking means are engaged and the brake which turns round with the pin(16) as its axis and comes into intermittent contact with the ratchet gear(11) is used as a braking means.

4. The seat belt winding force control device according to claim 2, characterized in that the brake(12) inserts a spring(13') into the slide holder(13) which comes into contact with the ratchet gear(11) and puts an accommodating member(14') to said spring (13') for forward and backward movement.

5. The seat belt winding force control device according to claim 2, characterized in that the brake(112) is such that the braking member which comes into contact with the ratchet gear is more elastically formed by the spring(113') within the accommodating holder(114).

6. The seat belt winding force control device according to claim 4, characterized in that the spring(13') comprises an overlapping spring(13'a), a bending part compressing overlapping spring(13'b), a coil spring (13'c) and a plurality of coil springs(13'd).

7. The seat belt winding force control device according to claim 2, characterized in that when the brake(12) is connected with the intermittent snapping switch (18) which is a reciprocating means, an extending member(17a) is connected with one side below the pin(16) of brake(12) from the end of intermittent snapping switch-(18).

8.  The seat belt winding force control device according to claim 2, characterized in that when the brake(12) is connected with the intermittent snapping switch (18) which is a reciprocating means, the extending member(17a) extending from the end of intermittent snapping switch-(18) is used as a connector, and a plate spring(20) is united with said extending member(17a) and the brake(12) is separately formed into a connector connecting region(A) and a brake function part(B), and the connecting region(A) is united with the extending member(17b) with the plate spring as an intermediate member and the brake function part-(B) is united with the lower region of plate spring.

9.  The seat belt winding force control device according to claim 2, characterized in that when the brake(12) is connected with the intermittent snapping switch (18) which is a reciprocating means, a coil spring (17c) is inserted into the end of intermittent snapping switch(18) and the other side of said coil spring(17c) is fixedly united with the lower side of brake(12) pin (16).

10.  The seat belt winding force control device according to claim 1, characterized in that a solenoid(sol) is formed as the reciprocating means of brake(12).

11.  The seat belt winding force control device according to claim 2, characterized in that as a means for absorbing the remaining striking power of button pushing member(22), the button(19a) is formed of striking power absorbable contractile quality.

12.  The seat belt winding force control device according to claim 2, characterized in that as a means for absorbing the remaining striking power of button pushing member(22), the button pushing member(22a) is formed of resilient quality.

13.  The seat belt winding force control device according to claim 2, characterized in that as a device for absorbing the remaining striking power of button pushing member(22), a spring-(19'c) is inserted into the button(19c).

FIG. 1

# FIG. 2

# FIG. 3

# FIG. 4

(A)

(B)

# FIG. 5

(A)

(B)

# FIG. 6

(A)

(B)

# FIG. 7

(A)

(B)

EP 0 463 186 A1

FIG. 8

16'

14'

14

13'

13

FIG.13

A

13'b

FIG. 9

13  13'a  13''  14

FIG. 10

13  13'b  14

FIG.11

13  13'c  14

FIG. 12

13  13'd  14

12

FIG.14

(A)

(B)

FIG. 15

# FIG. 16

# FIG.17

# FIG. 18

FIG.19

(A)

(B)

(C)

# FIG. 20

(A)

(B)

(C)

FIG. 20

(D)

FIG. 21

European
Patent Office

EUROPEAN SEARCH
REPORT

Application Number

EP 90 11 1544

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 103 845   (UEDA)<br>* column 4, line 6 - column 5, line 8 *<br>– – – | 1-3 | B 60 R 22/44 |
| X | US-A-4 066 223   (TAKADA)<br>* column 4, line 13 - column 5, line 68 *<br>– – – | 1-3 | |
| X | DE-A-2 705 653   (TOKAI RIKA DENKI SEISAKUSHO)<br>* page 9, line 20 - page 10, line 13 *<br>– – – | 1-3 | |
| X | US-A-4 053 116   (TAKADA)<br>* column 4, line 28 - column 5, line 2 *<br>– – – | 1-3 | |
| X | GB-A-2 020 962   (DAIMLER-BENZ)<br>* the whole document *<br>– – – | 1-3 | |
| X | US-A-4 669 751   (UNGER)<br>* the whole document *<br>– – – | 1-3 | |
| X | US-A-4 386 744   (HIGBEE)<br>* the whole document *<br>– – – – – | 1-3 | |

TECHNICAL FIELDS
SEARCHED (Int. Cl.5)

B 60 R

The present search report has been drawn up for all claims

| Place of search | Date of completion of search | Examiner |
|---|---|---|
| The Hague | 20 February 91 | STANDRING M A |